**Europäisches Patentamt**

**European Patent Office**

**Office européen des brevets**

(19)

(11) **EP 1 418 723 A1**

(12) **EUROPÄISCHE PATENTANMELDUNG**

(43) Veröffentlichungstag:
**12.05.2004 Patentblatt 2004/20**

(51) Int Cl.⁷: **H04L 27/36**

(21) Anmeldenummer: **02024680.7**

(22) Anmeldetag: **05.11.2002**

| | |
|---|---|
| (84) Benannte Vertragsstaaten:<br>**AT BE BG CH CY CZ DE DK EE ES FI FR GB GR IE IT LI LU MC NL PT SE SK TR**<br>Benannte Erstreckungsstaaten:<br>**AL LT LV MK RO SI** | (71) Anmelder: **SIEMENS AKTIENGESELLSCHAFT**<br>**80333 München (DE)**<br><br>(72) Erfinder: **Breitbach, Markus, Dr.**<br>**89081 Ulm (DE)** |

(54) **Verfahren zur Modulation eines binären Datenstroms**

(57)     Die Erfindung betrifft ein Verfahren zur Modulation eines binären Datenstroms, der einem physikalischen Kanal eines Funkkommunikationssystems zugeordnet ist und bei dem jeweils zwei aufeinanderfolgende Bits einem QPSK-Symbol entsprechen.

Der binäre Datenstrom wird erfindungsgemäß vor einer Spreizung in mindestens zwei Symbolströme aufgeteilt. Dabei werden aufeinanderfolgende QPSK-Symbole des binären Datenstroms jeweils abwechselnd einem der mindestens zwei Symbolströme zugeordnet. Ein derart gebildeter erster Symbolstrom wird in einem ersten Zweig gespreizt, verwürfelt und amplitudenskaliert. In einem zweiten Zweig wird ein entsprechend gebildeter zweiter Symbolstrom mit dem ersten Symbolstrom zu einem Ergebnissignal logisch verknüpft und das Ergebnissignal wird gespreizt, verwürfelt und amplitudenskaliert. Der amplitudenskalierte erste Symbolstrom bzw. das amplitudenskalierte Ergebnissignal gelangen als erster Datenstrom bzw. als zweiter Datenstrom an eine Summiereinrichtung zur Bildung eines Summensignals. Das Summensignal wird anschließend impulsgeformt und digital-analog-gewandelt.

Durch das erfindungsgemäße Verfahren wird ein binärer Datenstrom in mindestens zwei Symbolströme mit QPSK-Symbolen aufgeteilt und nachfolgend ein 16QAM-moduliertes analoges Ausgangssignal gebildet.

FIG 1

EP 1 418 723 A1

**Beschreibung**

Die Erfindung betrifft ein Verfahren zur Modulation eines binären Datenstroms, der einem physikalischen Kanal eines Funkkommunikationssystems zugeordnet ist und bei dem jeweils zwei aufeinanderfolgende Bits einem QPSK-Symbol entsprechen.

Bei Funkkommunikationssystemen, insbesondere bei UMTS-Funkkommunikationssystemen, werden derzeit QPSK-modulierte Signale im Downlink von einer Basisstation zu einem Teilnehmer verwendet. Die vorausgesetzten Signalparameter der QPSK-Signale sind in der Spezifikation 3GPP TS 25.213 v.5.1.0, UMTS-Release 99, beschrieben.

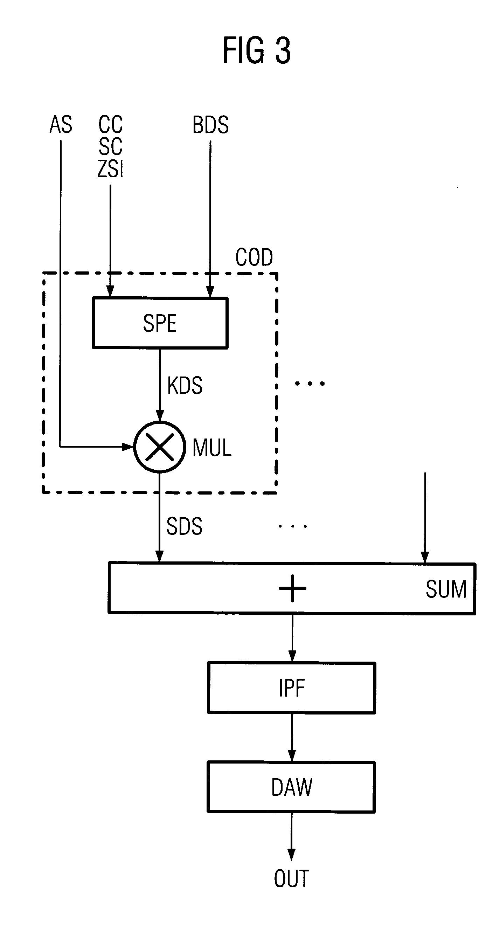

FIG 3 zeigt ein Blockschaltbild für eine QPSK-Modulation eines binären Datenstroms BDS, gemäß dem Stand der Technik. Dabei wird einer Kodiereinrichtung COD, die eine Spreizeinrichtung SPE und einen Multiplizierer MUL enthält, einerseits ein Signal AS zur Amplitudenskalierung, ein Spreizcode CC, ein Verwürfelungscode SC und eine Zeitschlitzformatinformation ZSI und andererseits der binärer Datenstrom BDS zugeführt.

Beim binären Datenstrom BDS entsprechen je zwei aufeinanderfolgende Bits einem QPSK-Symbol und der binäre Datenstrom BDS ist einem physikalischen Kanal eines UMTS-Funkkommunikationssystems fest zugeordnet. Mit Hilfe der Spreizeinrichtung SPE und dem der Spreizeinrichtung SPE zugeführten Spreizcode CC sowie des Verwürfelungscodes SC wird der binäre Datenstrom BDS gespreizt, verwürfelt und mit Hilfe der Zeitschlitzinformation ZSI einem Zeitschlitz mit einem angegebenen Zeitschlitzformat zugeordnet.

Ein Ausgangssignal der Spreizeinrichtung SPE gelangt als komplexwertiger Datenstrom KDS an den Multiplizierer MUL, an den das Signal AS zur Amplitudenskalierung angeschaltet ist. Mit Hilfe des Multiplizierers MUL wird eine Signalamplitudenskalierung durchgeführt.

Ein derart skalierter Datenstrom SDS wird mit hier nicht gezeigten weiteren skalierten Datenströmen von weiteren Spreizeinrichtungen chipweise sowohl symbolsynchron als auch zeitschlitzsynchron mit Hilfe einer Summationseinrichtung SUM aufaddiert. Ein durch Summation gebildetes Ausgangssignal der Summationseinrichtung SUM gelangt über einen Impulsformer IPF an einen Digital-Analog-Wandler DAW, mit dessen Hilfe ein QPSK-moduliertes, analoges Ausgangssignal OUT erzeugt wird.

Speziell beim sogenannten "High-Speed Downlink Packet Access" (HSDPA) jedoch sollen in Zukunft 16QAM-modulierte Signale zur Datenübertragung verwendet werden. Verfahren zur 16QAM-Modulation sind zum Beispiel in "Digital Communications", J.G. Proakis, McGraw-Hill, 2.Aufl., 1989, Seite 163 ff, beschrieben.

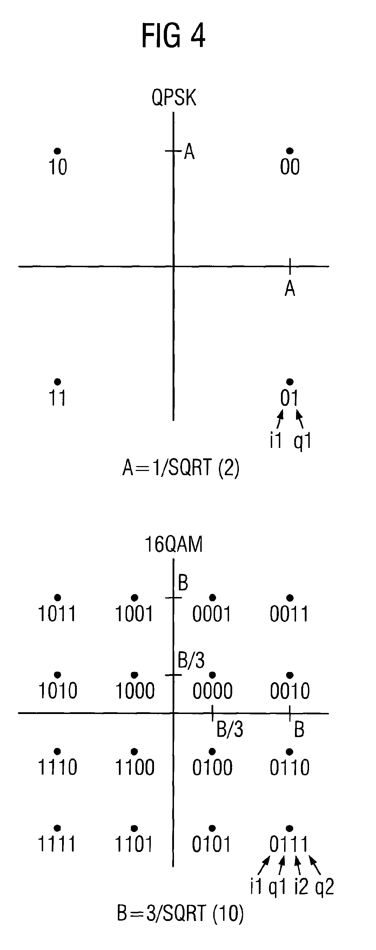

FIG 4 zeigt eine vergleichende Zuordnung von Bits eines Datenstroms zu Signalpunkten einer QPSK- bzw. einer 16QAM-Modulation. Die hier dargestellte Signalkonstellationen entsprechen der Spezifikation 3GPP TS 25.213 v. 5.1.0 für QPSK und für 16QAM.

Eine dargestellte Skalierung $A=1/\sqrt{2}$ für QPSK bzw. $B=3/\sqrt{10}$ für 16QAM bewirkt, dass eine mittlere Signalleistung bei beiden Modulationen auf einen "eins" entsprechenden Wert normiert wird. Es ist zu erkennen, dass innerhalb eines Quadranten Bits $i_1$ und $q_1$ bei den Signalpunkten der 16QAM-Modulation identisch sind zu den Bits $i_1$ und $q_1$ bei den Signalpunkten der QPSK-Modulation. Während also bei der 16QAM-Modulation die Bits $i_1$ und $q_1$ den jeweiligen Quadranten markieren, dienen Bits $i_2$ und $q_2$ zur Unterscheidung der einzelnen Signalpunkte innerhalb eines Quadranten.

Bei der geplanten Verwendung von 16QAM-modulierten Signalen für zukünftige Datenübertragungen einer Basisstation stellt sich das Problem, dass ein "Upgrade" von bereits betriebenen Basisstationen mit QPSK-modulierten Downlink-Signalen auf nun 16QAM-modulierte Downlink-Signale nicht ohne weiteres vorgenommen werden kann, da an jeder einzelnen Basisstation umfangreiche Umbauten bzw. ein umfangreicher Austausch von Systemkomponenten notwendig wäre.

Es ist Aufgabe der vorliegenden Erfindung, ein Modulationsverfahren derart anzugeben, dass mit lediglich geringem Aufwand ein Upgrade einer bisher verwendeten Basisstation auf den HSDPA-Standard durchgeführt werden kann.

Die Aufgabe der Erfindung wird durch die Merkmale des Patentanspruchs 1 gelöst. Vorteilhafte Weiterbildungen sind in den Unteransprüchen angegeben.

Erfindungsgemäß wird ein binärer Datenstroms, der einem physikalischen Kanal eines Funkkommunikationssystems zugeordnet ist und bei dem jeweils zwei aufeinanderfolgende Bits einem QPSK-Symbol entsprechen, vor einer durchzuführenden Spreizung in mindestens zwei Symbolströme aufgeteilt. Dabei werden aufeinanderfolgende QPSK-Symbole des binären Datenstroms jeweils abwechselnd einem der mindestens zwei Symbolströme zugeordnet.

Ein derart gebildeter erster Symbolstrom wird in einem ersten Zweig gespreizt; verwürfelt und amplitudenskaliert. In einem zweiten Zweig wird ein entsprechend gebildeter zweiter Symbolstrom mit dem ersten Symbolstrom zu einem Ergebnissignal logisch verknüpft und das Ergebnissignal wird gespreizt, verwürfelt und amplitudenskaliert. Der amplitudenskalierte erste Symbolstrom bzw. das amplitudenskalierte Ergebnissignal gelangt als erster Datenstrom bzw. als zweiter Datenstrom an eine Summiereinrichtung zur Bildung eines Summensignals. Das Summensignal gelangt anschließend über einen Impulsformer zur Digital-Analog-Wandlung.

Zusammenfassend wird ein binärer Datenstrom in mindestens zwei Symbolströme mit QPSK-Symbolen aufgeteilt und mit Hilfe des erfindungsgemäßen Verfahrens letztendlich ein 16QAM-moduliertes analoges Ausgangssignal gebildet.

Die QPSK-Modulation ist durch folgende technische Merkmale charakterisiert:

- Jedem einzelnen physikalischen Kanal steht eine eigene Spreizeinrichtung zur Verfügung.
- Zu modulierende Daten für einen physikalischen Kanal liegen als Bitstrom vor, wobei je 2 Bits jeweils einem späteren QPSK-Symbol entsprechen.
- Ein sogenannter Scrambling-Code (Verwürfelungscode), ein sogenannter Channelisation-Code (Spreizcode), ein Slotformat und eine einzustellende Signalamplitude werden jeder Spreizeinrichtung explizit mitgeteilt. Ein Spreizfaktor ergibt sich indirekt aus dem Channelisation-Code. Weitere Eingangssignale zur Spreizeinrichtung sind möglich, jedoch für die vorliegende Erfindung nicht von Belang.
- Unterstützt wird insbesondere das gemäß Spezifikation 3GPP TS 25.211 vorgeschriebene Slotformat für den PDSCH-Kanal mit einem Spreizfaktor gleich 16 (d.h. 320 bits/slot). Die genannte Spezifikation zeichnet sich dadurch aus, dass in einem Slot ausschließlich Daten transportiert werden, jedoch der Slot nicht zur Übertragung von Power-Control-Kommandos, Pilotsequenzen oder ähnlichem verwendet wird.
- Die jeweiligen Spreizverfahren der Spreizeinrichtungen sind bezüglich der Symbole bzw. Chips synchron zueinander.

Mit Hilfe des erfindungsgemäßen Verfahrens kann eine bei derzeit eingesetzten Basisstationen (NodeB) verwendete Modulations-Hardware beibehalten werden.

Ein Upgrade von bisherigen NodeB auf den HSDPA-Standard ist durch das erfindungsgemäße Verfahren mit geringem Aufwand realisierbar.

Im Folgenden wird ein Ausführungsbeispiel der vorliegenden Erfindung anhand einer Zeichnung näher erläutert. Dabei zeigt:

FIG 1 ein erstes Blockschaltbild zum erfindungsgemäßen Modulationsverfahren,

FIG 2 ein zweites Blockschaltbild zum erfindungsgemäßen Modulationsverfahren,

FIG 3 ein Blockschaltbild für eine QPSK-Modulation eines binären Datenstroms BDS, gemäß dem Stand der Technik, und

FIG 4 eine vergleichende Zuordnung von Bits eines Datenstroms zu Signalpunkten einer QPSK- bzw. einer 16QAM-Modulation.

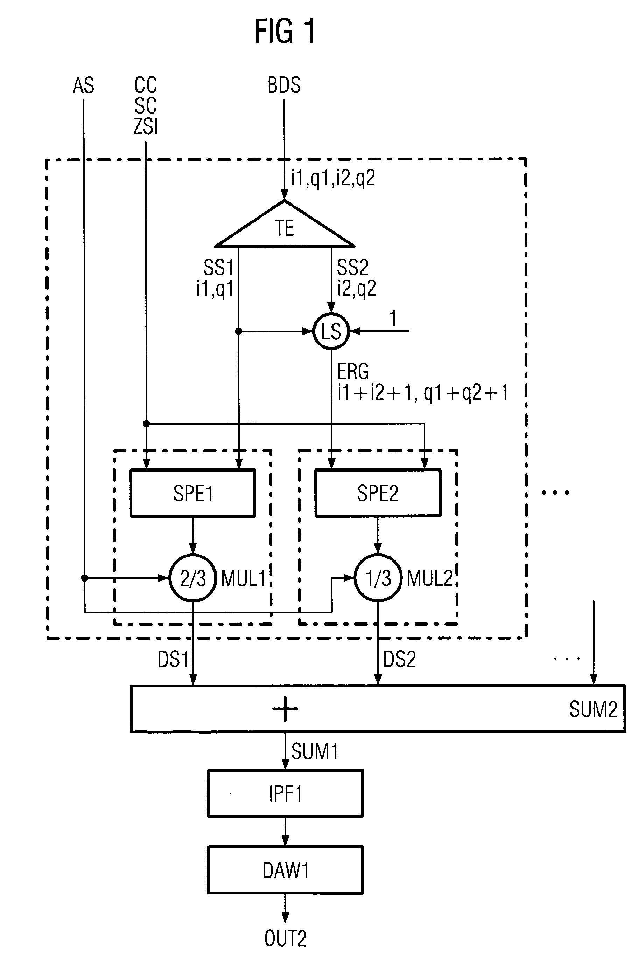

FIG 1 zeigt ein erstes Blockschaltbild zum erfindungsgemäßen Modulationsverfahren.

Im Folgenden wird ein binärer Datenstrom BDS betrachtet, der mittels 16QAM-Modulation über einen physikalischen Kanal einer Basisstation (NodeB) im Downlink zu einem Teilnehmer bzw. einem Terminal übertragen werden soll. Gemäß der Spezifikation 3GPP TS 25.213 v.5.1.0, Abschnitt 5.1, Tabelle 5, werden je vier aufeinanderfolgende Bits des binären Datenstroms BDS auf die Datenbits $i_1$, $q_1$, $i_2$ und $q_2$ abgebildet, wobei die Datenbits $i_1$, $q_1$, $i_2$ und $q_2$, wie in FIG 4 gezeigt, den einzelnen Signalpunkten zugeordnet sind.

Vergleichend zu FIG 3 gelangt der binäre Datenstrom BDS, mit hier gezeigten vier aufeinanderfolgenden Bits $i_1$, $q_1$, $i_2$ und $q_2$, als Eingangssignal an eine Teilungseinrichtung TE. Mit Hilfe der Teilungseinrichtung TE wird der binäre Datenstrom BDS in zwei Symbolströme SS1 und SS2 aufgeteilt, wobei jeweils zwei aufeinanderfolgende Bits, die jeweils einem QPSK-Symbol entsprechen, jeweils abwechselnd einem der beiden Symbolströme SS1 bzw. SS2 zugeordnet werden. Einem ersten Symbolstrom SS1 sind die Bits $i_1$ und $q_1$ zugeordnet, während einem zweiten Symbolstrom SS2 die Bits $i_2$ und $q_2$ zugeordnet sind.

In einem ersten Zweig gelangt der erster Symbolstrom SS1 direkt an eine erste Spreizeinrichtung SPE1 und wird dort mit Hilfe des ebenfalls zugeführten Spreizcodes CC und des Verwürfelungscodes SC gespreizt, verwürfelt und anschließend mit Hilfe eines ersten Multiplizierers MUL1 mit einem Faktor f=2/3 zur Amplitudenskalierung multipliziert. Zu diesem Zweck ist dem ersten Multiplizierer MUL1 ein Signal AS zur Amplitudenskalierung angeschaltet.

Analog zu FIG 3 wird mit Hilfe der ersten Spreizeinrichtung SPE1 der Symbolstrom SS1 einem Zeitschlitz mit Hilfe einer zugeführten Zeitschlitzinformation ZSI einem angegebenen Zeitschlitzformat zugeordnet. Ein Ausgangssignal des ersten Multiplizierers MUL1 gelangt als amplitudenskalierter erster Datenstrom DS1 an eine Summationseinrichtung SUM2 zur Bildung eines Summensignals SUM1.

In einem zweiten Zweig gelangt der zweite Symbolstrom SS2 an eine Logikschaltung LS, die hier als XOR-Gatter ausgebildet ist. Es erfolgt eine logische bitweise Verknüpfung des zweiten Symbolstroms SS2 mit dem ersten Symbolstrom SS1, der gleichfalls an die Logikschaltung LS angeschaltet ist, zur Bildung eines Ergebnissignals ERG.

Dabei ist an einem der Eingänge der als XOR-Gatter ausgebildeten Logikschaltung LS eine logische "1" konstant angelegt, so dass zugeführte Bits $i_1$ und $i_2$ XOR-verknüpft und invertiert werden. Gleiches gilt für zugeführte Bits $q_1$ und $q_2$, die gleichfalls XOR-verknüpft und invertiert werden.

Das Ergebnissignal ERG wird nachfolgend einer zweiten Spreizeinrichtung SPE2 zugeführt, mit deren Hilfe das Ergebnissignal ERG gespreizt, verwürfelt und mittels einem zweiten Multiplizierer MUL2 mit einem Faktor f=1/3 zur Amplitudenskalierung multipliziert wird. Das Ausgangssignal des zweiten Multiplizierers MUL2 gelangt als amplitudenskalierter zweiter Datenstrom DS2 an die Summationseinrichtung SUM2 zur Bildung des Summensignals SUM1.

Zu erwähnen ist hier noch, dass mit Hilfe der zweiten Spreizeinrichtung SPE2 der Symbolstrom SS2 mit Hilfe der Zeitschlitzinformation ZSI einem Zeitschlitz mit einem angegebenen Zeitschlitzformat zugeordnet wird und dass die Spreizung und die Verwürflung in beiden Spreizeinrichtungen SPE1 bzw. SPE2 identisch durchgeführt wird.

Mit Hilfe der Summiereinrichtung SUM2 erfolgt chipweise symbolsynchron und zeitschlitzsynchron die Bildung des Summensignals SUM1, das wiederum über einen Impulsformer IPF1 zu einen Digital-Analog-Wandler DAW1 gelangt, der letztendlich ein 16QAM-moduliertes analoges Ausgangssignal OUT2 bildet.

Der Summiereinrichtung SUM2 sind noch weitere, hier nicht gezeigte amplitudenskalierte Datenströme weiterer Spreizeinrichtungen zuführbar.

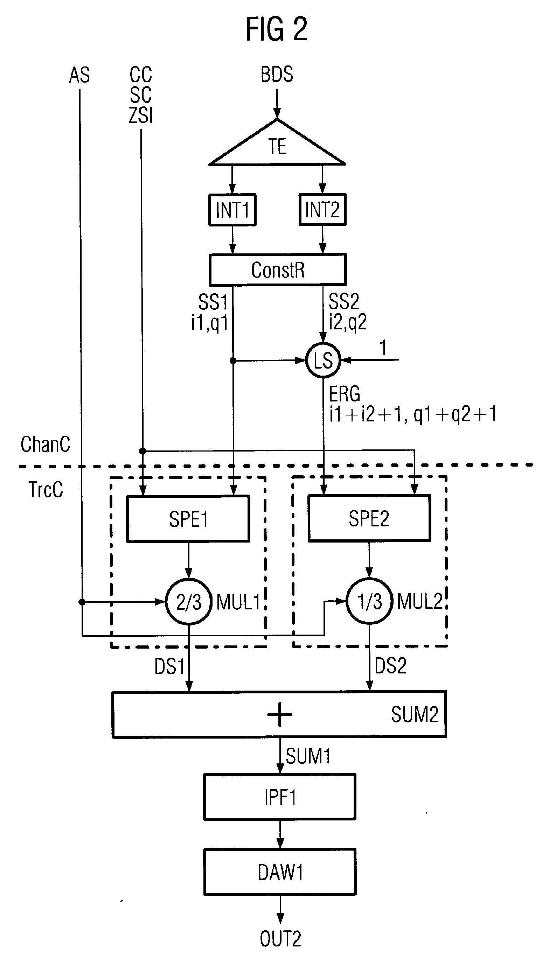

Bei der Addition der beiden skalierten Datenströme DS1 und DS2 verschiebt ein erstes aus den Bits $i_1$, $q_1$ gebildetes QPSK-Symbol gewissermaßen ein dem zweiten Datenstrom DS2 entsprechend zuordenbares QPSK-Symbol in einen der vier in FIG2 gezeigten Quadranten. Es ergeben sich dadurch exakt die in FIG 4 angegebenen Signalpunkte der 16QAM-Modulation. Mit Hilfe der XOR-Verknüpfung und der Invertierung der Signale $i_2$ und $q_2$ mit den den Quadranten bestimmenden Bits $i_1$ und $q_1$ wird dafür gesorgt, dass die Verschiebung in alle Quadranten erfolgt und sich die in FIG 4 gezeigte Zuordnung von Bits zu Signalpunkten der 16QAM-Konstellation ergibt.

Es sei noch angemerkt, dass die beiden Symbolströme SS1 bzw. SS2 jeweils als Ausgangssignal von je einem von zwei in 3GPP TS 25.212 v.5.1.0, Abschnitt 4.5.6, beschriebenen Interleavern zuordenbar sind.

Da bei der in FIG 4 dargestellten QPSK-Signalkonstellation alle Achsenabschnitte denselben Wert A aufweisen, lässt sich die Multiplikation des gespreizten Signals besonders einfach realisieren. Dieser Implementierungsvorteil bleibt erhalten, wenn die 16QAM-Modulation durch die erfindungsgemäße Addition von QPSK-modulierten Signalen realisiert wird.

FIG 2 zeigt ein zweites Blockschaltbild zum erfindungsgemäßen Modulationsverfahren.
In 3GPP TS 25.212 v.5.1.0, Abschnitt 4.5.6, wird ein sogenanntes "Constellation Rearrangement" beschrieben, bei dem gegebenenfalls die beiden Symbolströme SS1 bzw. SS2 vertauscht werden. Dies ist hier im Block ConstR dargestellt.

Im Abschnitt 4.5.8 wird ein sogenanntes "Physical-Channel-Mapping" beschrieben, das jedoch keinerlei Auswirkungen hinsichtlich der Erfindung hat.

In einer vorteilhaften Weiterbildung wird unmittelbar nach der Aufteilung des binären Datenstroms BDS jeder einzelne Symbolstrom SS1 bzw. SS2 einem Interleaving-Block INT1 bzw. INT2 zugeführt und nachfolgend dem Block ConstR zum "Constellation Rearrangement" zugeführt.

Da in einer Basisstation bzw. in einem NodeB die Aufteilung des binären Datenstroms, die XOR-Verknüpfung und die Multiplikation auch an einer anderen physikalischen Stelle erfolgen kann, ergibt sich eine vorteilhafte Aufgabenteilung beim erfindungsgemäßen Verfahren zwischen einer "Channel-Card" ChanC einerseits und einer "Transceiver-Card" TrcC andererseits. Damit wird erreicht, dass bislang verwendete Schnittstellen (Interface) zur Spreizeinrichtung unverändert weiterverwendbar sind.

**Patentansprüche**

1. Verfahren zur Modulation eines binären Datenstroms, der einem physikalischen Kanal eines Funkkommunikationssystems zugeordnet ist und bei dem jeweils zwei aufeinanderfolgende Bits einem QPSK-Symbol entsprechen,

   - bei dem der binäre Datenstrom mit Hilfe eines Spreizcodes, eines Verwürfelungscodes und eines Skalierungssignals gespreizt, verwürfelt und amplitudenskaliert wird,
   - bei dem der amplitudenskalierte Datenstrom mit weiteren amplitudenskalierten Datenströmen weiterer physikalischer Kanäle chipweise symbolsynchron zu einem Summensignal addiert wird, und
   - bei dem das Summensignal impulsgeformt und zu einem analogen Ausgangssignal digital/analog-gewandelt wird,

   **dadurch gekennzeichnet**

   - **dass** der binäre Datenstrom vor der Spreizung in mindestens zwei Symbolströme aufgeteilt wird, wobei aufeinanderfolgende QPSK-Symbole des binären Datenstroms jeweils abwechselnd einem der mindestens zwei Symbolströme zugeordnet werden,
   - **dass** in einem ersten Zweig ein erster Symbolstrom gespreizt, verwürfelt und amplitudenskaliert wird und als amplitudenskalierter erster Datenstrom zur Bildung des Summensignals gelangt, und
   - **dass** in einem zweiten Zweig ein zweiter Symbolstrom mit dem ersten Symbolstrom zu einem Ergebnissignal logisch verknüpft wird und das Ergebnissignal gespreizt, verwürfelt und amplitudenskaliert wird und als amplitudenskalierter zweiter Datenstrom zur Bildung des Summensignals gelangt.

2. Verfahren nach Anspruch 1, **dadurch gekennzeichnet, dass** der erste und der zweite Symbolstrom mit Hilfe einer XOR-Logik zum Ergebnissignal logisch verknüpft werden.

3. Verfahren nach Anspruch 1 oder 2, **dadurch gekennzeichnet, dass** in jedem Zweig die Spreizung und die Verwürfelung mit Hilfe von identischen Spreizcodes und Verwürfelungscodes durchgeführt wird.

4. Verfahren nach einem der vorhergehenden Ansprüche, **dadurch gekennzeichnet, dass** im ersten Zweig die Amplitudenskalierung mit einem Faktor f1=2/3 und im zweiten Zweig mit einem Faktor f2=1/3 durchgeführt wird.

5. Verfahren nach Anspruch 4, **dadurch gekennzeichnet, dass** das analoge Ausgangssignal 16QAM-moduliert ist.

6. Verfahren nach einem der vorhergehenden Ansprüche, **dadurch gekennzeichnet, dass** als Funkkommunikationssystem ein Mobilfunksystem mit Zeitschlitzvielfachzugriffsverfahren verwendet wird.

7. Verfahren nach Anspruch 6, **dadurch gekennzeichnet, dass** ein nach dem UMTS-Standard ausgebildetes Mobilfunksystem verwendet wird.

8. Verfahren nach Anspruch 6 oder 7, **dadurch gekennzeichnet, dass** das Summensignal zeitschlitzsynchron gebildet wird.

9. Verfahren nach einem der vorhergehenden Ansprüche, **dadurch gekennzeichnet, dass** unmittelbar nach der Aufteilung des binären Datenstroms in Symbolströme diese jeweils einzeln einem Interleaving-Verfahren unterzogen werden und nachfolgend gemeinsam einem Constellation-Rearrangement gemäß UMTS-Standard 3GPP TS 25.212v5.1.0 zugeführt werden.

10. Basisstation eines Funkkommunikationssystems, **gekennzeichnet durch** Mittel zur Durchführung des Verfahrens nach einem der Ansprüche 1 bis 9.

# FIG 1

# FIG 2

AS    CC
      SC
      ZSI                    BDS

TE

INT1      INT2

ConstR

SS1       SS2
i1,q1     i2,q2

LS  ← 1

ERG
i1+i2+1, q1+q2+1

ChanC

TrcC

SPE1              SPE2

2/3 MUL1          1/3 MUL2

DS1               DS2

+            SUM2

SUM1

IPF1

DAW1

OUT2

# FIG 3

# FIG 4

QPSK

10      A      00

A

11      01
        ↑  ↑
        i1  q1

A＝1/SQRT (2)

16QAM

B

1011   1001   0001   0011

B/3

1010   1000   0000   0010

B/3    B

1110   1100   0100   0110

1111   1101   0101   0111
                     ↑ ↑ ↑ ↑
                    i1 q1 i2 q2

B＝3/SQRT (10)

**Europäisches Patentamt**

# EUROPÄISCHER RECHERCHENBERICHT

Nummer der Anmeldung

EP 02 02 4680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | 3GPP TS 25.213 V5.1.0 (2002-06); 3RD GENERATION PARTNERSHIP PROJECT; TECHNICAL SPECIFICATION GROUP RADIO ACCESS NETWORK; SPREADING AND MODULATION (FDD) (RELEASE 5),<br>- Juni 2002 (2002-06) XP002237760<br>* Seite 19 - Seite 20 *<br>--- | 1-10 | H04L27/36 |
| A | US 5 815 531 A (DENT PAUL W)<br>29. September 1998 (1998-09-29)<br>* Zusammenfassung *<br>* Spalte 2, Zeile 56 - Spalte 4, Zeile 17 *<br>--- | 1-10 | |
| A,D | 3GPP TS 25.212 V5.1.0 (2002-06); 3RD GENERATION PARTNERSHIP PROJECT; TECHNICAL SPECIFICATION GROUP RADIO ACCESS NETWORK; MULTIPLEXING AND CHANNEL CODING (FDD) (RELEASE 5),<br>- Juni 2002 (2002-06) XP002237825<br>* Seite 61 - Seite 62 *<br>--- | 9 | |
| A | CILLIERS J E ET AL: "A synchronous Q^2PSK DS-CDMA system: system conceptualisation, implementation and performance analysis" SPREAD SPECTRUM TECHNIQUES AND APPLICATIONS, 1998. PROCEEDINGS., 1998 IEEE 5TH INTERNATIONAL SYMPOSIUM ON SUN CITY, SOUTH AFRICA 2-4 SEPT. 1998, NEW YORK, NY, USA,IEEE, US,<br>2. September 1998 (1998-09-02), Seiten 4-8, XP010307703<br>ISBN: 0-7803-4281-X<br>----- | | |

RECHERCHIERTE SACHGEBIETE (Int.Cl.7)

H04L

*Der vorliegende Recherchenbericht wurde für alle Patentansprüche erstellt*

| Recherchenort | Abschlußdatum der Recherche | Prüfer |
|---|---|---|
| DEN HAAG | 10. April 2003 | Koukourlis, S |

**ANHANG ZUM EUROPÄISCHEN RECHERCHENBERICHT
ÜBER DIE EUROPÄISCHE PATENTANMELDUNG NR.**　　　　EP 02 02 4680

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2003

| Im Recherchenbericht angeführtes Patentdokument | Datum der Veröffentlichung | Mitglied(er) der Patentfamilie | Datum der Veröffentlichung |
|---|---|---|---|
| US 5815531　A | 29-09-1998 | AU　　739232 B2 | 04-10-2001 |
|  |  | AU　3069297 A | 07-01-1998 |
|  |  | BR　9709696 A | 10-08-1999 |
|  |  | CA　2257930 A1 | 18-12-1997 |
|  |  | EP　0904650 A2 | 31-03-1999 |
|  |  | JP 2000512457 T | 19-09-2000 |
|  |  | KR 2000016486 A | 25-03-2000 |
|  |  | US　6185259 B1 | 06-02-2001 |
|  |  | WO　9748219 A2 | 18-12-1997 |
|  |  | US 2001001008 A1 | 10-05-2001 |

EPO FORM P0461

Für nähere Einzelheiten zu diesem Anhang : siehe Amtsblatt des Europäischen Patentamts, Nr.12/82